# EUROPEAN PATENT SPECIFICATION

(11) **EP 2 161 492 B1**
(45) Date of publication and mention of the grant of the patent: **27.06.2012**
(21) Application number: 08738748.6
(22) Date of filing: 24.03.2008
(51) Int. Cl.: F21S 2/00, F21V 7/00, F21V 7/22, G02F 1/13357, F21Y 103/00

(54) **LIGHTING APPARATUS, DISPLAY UNIT, AND TELEVISION RECEIVER**
BELEUCHTUNGSVORRICHTUNG, ANZEIGEEINHEIT UND FERNSEHEMPFÄNGER
APPAREIL D'ECLAIRAGE, ECRAN ET RECEPTEUR DE TELEVISION

(30) Priority: 04.07.2007 JP 2007176330
(43) Date of publication of application: 10.03.2010
(73) Proprietor: Sharp Kabushiki Kaisha, Osaka-shi, Osaka 545-8522 (JP)
(72) Inventor: KUROMIZU, Yasumori, Osaka 545-8522 (JP); YOKOTA, Masashi, Osaka 545-8522 (JP); SHIMIZU, Masaki, Osaka 545-8522 (JP)
(74) Representative: Müller - Hoffmann & Partner
(86) International application number: PCT/JP2008/055409
(87) International publication number: WO 2009/004840

(56) References cited:
- EP-A1- 1 564 479
- JP-A- 2002 196 326
- JP-A- 2003 307 492
- JP-A- 2004 206 906
- JP-A- 2004 220 980
- US-A1- 2004 080 925
- US-A1- 2007 076 142

## Description

### TECHNICAL FIELD

The present invention relates to a lighting device, a display device and a television receiver.

### BACKGROUND ART

In a display device having non-luminous optical elements as typified by a liquid crystal display device, a backlight device is provided on the backside of a display panel such as a liquid crystal panel, so as to illuminate the display panel (as shown in Patent Document 1, for example).

In order to prevent reduction in luminescent efficiency of light sources attributable to their own heat, Patent Document 1 discloses a technique that provides at least one opening section on a reflective member arranged across a plurality of light sources from a liquid crystal display element, so that the opening section is located to correspond to the orthogonal projection of a light source onto the reflective member, which can be obtained by projecting the light source along a direction perpendicular to the display surface of the liquid crystal display element.

Following recent needs for the growing size and power-saving feature of a liquid crystal display device, problems have been generated in connection with light sources of the liquid crystal display device. Some of them are cited as major problems, which includes problems related to the uneven distribution of brightness, such as unevenness of brightness or visible images of lamps, as well as the problems related to the above-described luminescent efficiency.

In order to obtain homogeneous light sources overcoming the uneven distribution of brightness, for example, Patent Document 2 discloses a technique that provides a number of transmittance regulators having a size equal to or smaller than 500 micrometers, which are arranged on an optical member and in a predetermined pattern of density distribution.

Further, Patent Document 3 discloses a technique that provides a discloses a technique that provides a number of transmittance regulators having a size equal to or smaller than 500 micrometers, which are arranged on an optical member and in a predetermined pattern of density distribution.

Further, Patent Document 3 discloses a technique that provides a plurality of straight tube lamps arranged substantially parallel and along the horizontal or longitudinal direction of the display screen of a display panel. The intervals between the straight tube lamps are set to be narrower at the central area of the display screen of the display panel and to increase at a constant rate and towards the upper or lower end of the display screen (which is also referred to as an unequal lamp-pitch structure) . In general, people pay attention to the center of the screen, and therefore don't mind if the end of the screen has brightness slightly lower than that of the center of the screen. Focusing on this tendency, the technique allows for reduction in number of lamps and therefore in power consumption while maintaining the uniformity in brightness of the surface light source.
Patent Document 1: JP-A-2002-196326
Patent Document 2: JP-A-2007-17941
Patent Document 3: JP-B-3642723

In US 2007/0076142 A1, a backlight module of a liquid crystal TV having a liquid crystal monitor including a plurality of cold cathode fluorescent lamps (CFL) and a diffusing reflector below is disclosed. It is shown that the distance between the respective CFLs is arranged so that a central portion is narrow and an end portion is wide. The backlight module includes a triangular sectional projection structure on the diffusing reflector only between the CFLs between which the distance is widest, in the end portion. According to the disclosure, enhancement of the center brightness is achieved without increasing consumption of power.

### (Problem to be Solved by the Invention)

However, the existing measures are not adequate to prevent the uneven distribution of brightness, and accordingly, there is an urgent need to develop new technologies in accordance with the growing screen size of a liquid crystal display device. Particularly in the unequal lamp-pitch structure as in Patent Document 3, the brightness distribution on the entire screen is extremely sensitive to the arrangement of lamps. Therefore, the end of the screen may be prone to display unevenness, such as brightness unevenness due to shortage of the light amount attributable to the wide intervals between lamps, or visible images of lamps due to insufficient reflection of the light.

### DISCLOSURE OF THE INVENTION

The present invention was made in view of the foregoing circumstances, and an object thereof is to provide a lighting device having a simple construction capable of partially regulating the illumination brightness so as to provide a gentle distribution of illumination brightness. A further object of the present invention is to provide a display device having the lighting device, and to provide a television receiver having the display device.

### (Means for Solving the Problem).

These objects are solved by the claimed subject matter according to the independent claim

In order to solve the above problem, a lighting device according to the present invention includes a plurality of tubular light sources arranged parallel to one another, and a light reflecting member arranged on the side of the tubular light sources that corresponds to the opposite side of the light emitting side. The tubular light sources are arranged so that a narrow-interval area where the arrangement interval thereof is relatively narrow and a wide-interval area where the arrangement interval is relatively wide are provided. An opening also called opening section is formed on the light reflecting member. The opening section is provided so that the opening ratio as a ratio of the area of the opening section in the entire light reflecting member is higher at an area corresponding to the narrow-interval area, than at an area corresponding to the wide-interval area.

The lighting device, in which the tubular light sources are thus arranged so that the narrow-interval area where the arrangement interval is relatively narrow and the wide-interval area where the arrangement interval is relatively wide are provided, can have illumination brightness that is higher at the narrow-interval area side than at the wide-interval area side. Further, the provision of the wide-interval area can lead to reduction in number of tubular illumination brightness are arranged in a balanced manner. If the illumination brightness differs excessively between the narrow-interval area and the wide-interval area, the entire distribution of illumination brightness may be provided as an uneven distribution, resulting in brightness unevenness in a display device that uses the present lighting device, for example.

According to the present invention, the opening section of the light reflecting member is additionally provided in the above construction having linear light sources arranged at intervals of varying length, so that the opening ratio as a ratio of the area of the opening section in the entire light reflecting member is higher at an area corresponding to the narrow-interval area of the linear light sources, than at an area corresponding to the wide-interval area of the linear light sources.
Some of the lights from the linear light sources are directly oriented to the light emitting side (e.g., to the display panel side) . However, the rest may be emitted in directions other than toward the light emitting side, and can be reflected by the light reflecting member to the light emitting side. Both lights collectively provide the illumination brightness.

In view of this, the provision of the opening section on the light reflecting member enables reduction in amount of light to be reflected by the light reflecting member, because the opening section is less prone to reflecting lights from the linear light sources. Consequently, the illumination brightness can be reduced. At the time, the reduction of illumination brightness can be set to be larger at the narrow-interval area of the array of the linear light sources, as a result of setting the opening ratio, i.e., the ratio of the area of the opening section in the entire light reflecting sheet, to be higher at the area corresponding to the narrow-interval area than at the area corresponding to the wide-interval area. Thus, the difference in illumination brightness between the narrow-interval area and the wide-interval area can be reduced. That is, the adjustment of illumination brightness between the narrow-interval area and the wide-interval area of the array of the linear light sources can be achieved by regulating the opening ratio in the light reflecting member. Consequently, the illumination brightness can be gently distributed over the entire lighting device, and thereby display unevenness such as the above-described brightness unevenness can be prevented or suppressed, for example, in a display device that uses the present lighting device.

Some aspects of the present invention provide variations of arrangement intervals of the linear light sources. For example, the linear light sources may be arranged so that the narrow interval area is positioned in the array direction of the plurality of linear light sources so as to be on the inner side of the wide-interval area.
Further, the narrow-interval area of the linear light sources may be positioned in the array direction of the linear light sources so as to be on the center side, while the wide-interval area may be positioned in the array direction of the linear light sources so as to be on an end side.
Various arrangements other than those described above are also possible. However, further aspects of the present invention will be hereinafter explained, pointing to the case where the narrow-interval area is positioned at a central area of the array of the linear light sources while the wide-interval area is positioned at an end area of the array of the linear light sources, as an example.

In the lighting device of the present invention, the above opening section can include a plurality of opening sections arranged along an axial direction of the linear light sources, in which the interval between opening sections of the plurality of opening sections adjacently arranged along the axial direction and in the area corresponding to the narrow-interval area may be set to be smaller than the interval between opening sections of the plurality of opening sections adjacently arranged along the axial direction and in the area corresponding to the wide-interval area.
Further, the above opening section can include a plurality of opening sections arranged along the array direction of the linear light sources, in which the interval between opening sections of the plurality of opening sections adjacently arranged along the array direction and in the area corresponding to the narrow-interval area may be set to be smaller than the interval between opening sections of the plurality of opening sections adjacently arranged along the array direction and in the area corresponding to the wide-interval area.

In these constructions, regulation of the opening ratio in the light reflecting member is achieved by adjusting the intervals between opening sections. That is, due to the intervals between opening sections being set to be smaller at the area corresponding to the narrow-interval area of the linear light sources than at the area corresponding to the wide-interval area, a larger number of opening sections can be provided in the area corresponding to the narrow-interval area. Thus, the opening ratio in the light reflecting member is set to be relatively high at the area corresponding to the narrow-interval area. Consequently, the amount of light to be reflected and therefore the illumination brightness can be reduced at the narrow-interval area, and thereby the illumination brightness can be gently distributed between the narrow-interval area and the wide-interval area of the linear light sources.
Note that the axial direction of the linear light source corresponds to the longitudinal direction of the light reflecting member. Therefore, compared to opening sections arranged along the array direction of the linear light sources, a larger number of opening sections can be arranged along the axial direction, and the intervals between opening sections can be varied in various ways.

The opening section may be formed to have a planer dimension that is larger at the area corresponding to the narrow-interval area than at the area corresponding to the wide-interval area.
In this construction, regulation of the opening ratio in the light reflecting member is achieved by adjusting the planar dimension (or size) of the opening section. That is, due to the planar dimension of the opening section being set to be larger at the area corresponding to the narrow-interval area than at the area corresponding to the wide-interval area, the opening ratio in the light reflecting member can be relatively high at the area corresponding to the narrow-interval area. Consequently, the amount of light to be reflected and therefore the illumination brightness can be reduced at the narrow-interval area, and thereby the illumination brightness can be gently distributed between the narrow-interval area and the wide-interval area of the linear light sources.

The linear light source can include a high voltage area to be subjected to relatively high voltage and a low voltage area to be subjected to relatively low voltage. The opening section may be provided so that the opening ratio as a ratio of the area of the opening section in the entire light reflecting member is higher at an area corresponding to the high voltage area, than at an area corresponding to the low voltage area.
In some cases, the brightness of the linear light source may be higher at the high voltage area of the linear light source, than at the low voltage area thereof. In view of this, the opening section is provided so that the opening ratio, i.e., the ratio of the area of the opening section in the entire light reflecting member, is set to be higher at the area corresponding to the high voltage area, than at the area corresponding to the low voltage area. Thereby, the amount of light to be reflected and therefore illumination brightness can be reduced more greatly at the high voltage area. Thus, the difference in illumination brightness between the high voltage area and the low voltage area can be reduced. Consequently, the illumination brightness can be gently distributed.

The above opening section can include a plurality of opening sections arranged along an axial direction of the linear light sources, in which the interval between opening sections of the plurality of opening sections adjacently arranged along the axial direction and in the area corresponding to the high voltage area may be set to be smaller than the interval between opening sections of the plurality of opening sections adjacently arranged along the axial direction and in the area corresponding to the low voltage area.
Further, the above opening section can include a plurality of opening sections arranged along the array direction of the linear light sources, in which the interval between opening sections of the plurality of opening sections adjacently arranged along the array direction and in the area corresponding to the high voltage area may be set to be smaller than the interval between opening sections of the plurality of opening sections adjacently arranged along the array direction and in the area corresponding to the low voltage area.

In these constructions, regulation of the opening ratio in the light reflecting member is achieved by adjusting the intervals between opening sections. That is, due to the intervals between opening sections being set to be smaller at the area corresponding to the high voltage area than at the area corresponding to the low voltage area, a larger number of opening sections can be provided in the area corresponding to the high voltage area. Thus, the opening ratio in the light reflecting member is set to be relatively high at the area corresponding to the high voltage area. Consequently, the amount of light to be reflected and therefore the illumination brightness can be reduced at the high voltage area, and thereby the illumination brightness can be gently distributed between the high voltage area and the low voltage area.
Note that the axial direction of the linear light source corresponds to the longitudinal direction of the light reflecting member. Therefore, compared to opening sections arranged along the array direction of the linear light sources, a larger number of opening sections can be arranged along the axial direction, and the intervals between opening sections can be varied in various ways.

The opening section may be formed to have a planer dimension that is larger at the area corresponding to the high voltage area than at the area corresponding to the low voltage area.
In this construction, regulation of the opening ratio in the light reflecting member is achieved by adjusting the planar dimension (or size) of the opening section. That is, due to the planar dimension of the opening section being set to be larger at the area corresponding to the high voltage area of the linear light source than at the area corresponding to the low voltage area, the opening ratio in the light reflecting member can be relatively high at the area corresponding to the high voltage area. Consequently, the amount of light to be reflected and therefore the illumination brightness can be reduced at the high voltage area, and thereby the illumination brightness can be gently distributed between the high voltage area and the low voltage area of the linear light sources.

A chassis can be arranged to contain the linear light sources and the light reflecting member having the opening section. The chassis can be formed of a metallic plate, and the light reflecting member may be provided to have a light reflectivity higher than the light reflectivity of the chassis.
According to the construction, the lights from the linear light sources are partially reflected by the light reflecting member, while the rest may reach the metallic chassis through the opening section of the light reflecting member and can be reflected by the chassis. In view of this, the light reflectivity of the light reflecting member is set to be higher than that of the chassis, so that a smaller amount of light can be reflected at the area of the opening section. Thus, adjustment of illumination brightness can be achieved.

On the chassis, at least an inner surface of surfaces thereof may be coated with a color selected from white and similar colors.
If the chassis is thus coated with white or a similar color being prone to reflecting light, the chassis can have a high light reflectivity. Consequently, even at the opening section, the lights from the linear light sources can be reflected with relatively high efficiency, resulting in effective use of the light.
Further, an excessively large difference in brightness between the opening section and the ordinary portions surrounding the opening section (or areas not including opening section) can be prevented. Therefore, the visible opening section, which may be caused by brightness difference, can be prevented, when the present lighting device is used for a display device, for example.

Alternatively, at least an inner surface of surfaces of the chassis may be coated with a color selected from black, gray and similar colors.
If the chassis is thus coated with black, gray or a similar color being less prone to reflecting light, the chassis can have a lower light reflectivity or more greatly differ in light reflectivity from the light reflecting member. Consequently, the opening section can function as a regulator for illumination brightness, more effectively.

A member with a color selected from transparent, white and similar colors may be arranged between the light reflecting member and the chassis.
According to this construction, the lights from the linear light sources, having reached the opening section, are reflected by the member arranged between the light reflecting member and the chassis. The member has transparent, white or a similar color being prone to reflecting light, and therefore the light can be reflected with relatively high efficiency, which can result in effective use of the light.
Further, an excessively large difference in brightness between the opening section and the ordinary portions surrounding the opening section (or areas not including opening section) can be prevented. Therefore, the visible opening section, which may be caused by brightness difference, can be prevented, when the present lighting device is used for a display device, for example.

Alternatively, a member with a color selected from black, gray and similar colors may be arranged between the light reflecting member and the chassis.
Also in this construction, the lights from the linear light sources, having reached the opening section, are reflected by the member arranged between the light reflecting member and the chassis. The member has black, gray or a similar color being less prone to reflecting light, and therefore can have a lower light reflectivity or more greatly differ in light reflectivity from the light reflecting member. Consequently, the opening section can function as a regulator for illumination brightness, more effectively.

A chassis can be arranged to contain the light sources and the light reflecting member having the opening section. The chassis can be formed of a resin molded component, and the light reflecting member may be provided to have a light reflectivity higher than the light reflectivity of the chassis.
The chassis thus formed of a resin molded component can be provided with improved moldability, and regulation of the light reflectivity thereof can be readily achieved by addition of a dye material or the like.

A light source supporting member may be arranged to support the linear light source on the chassis. A through hole for insertion of the light source supporting member can be provided on the light reflecting member, so that the opening section and the through hole differ in planar dimension from each other.
In this case, as well as the opening section, the opening (or through hole) having another function is also provided on the light reflecting member. In view of this, the opening section and the through hole are provided to differ in planar dimension from each other. Thereby, the opening section and the through hole are distinguishable from each other, and therefore confusion therebetween can be prevented at the time of assembly of the lighting device. Consequently, the manufacturing process may be simplified.

Further, in the case of having a light source supporting member arranged to support the linear light source on the chassis, a through hole for insertion of the light source supporting member can be provided on the light reflecting member, so that the opening section and the through hole differ in shape from each other.
Also in this case, as well as the opening section, the opening (or through hole) having another function is provided on the light reflecting member. In view of this, the opening section and the through hole are provided to differ in shape from each other. Thereby, the opening section and the through hole are distinguishable from each other, and therefore confusion therebetween can be prevented at the time of assembly of the lighting device. Consequently, the manufacturing process may be simplified.

The above opening section can include a plurality of opening sections arranged in a zigzag pattern.
Alternatively, the above opening section can include a plurality of opening sections arranged in a line.
In these constructions, the opening sections are provided to form a regular arrangement. Thereby, the illumination brightness can be regulated with improved accuracy.

The opening section can be formed on the light reflecting member by punching.
Alternatively, the opening section can be formed on the light reflecting member by a cutting plotter.
The opening section, which is thus to be formed by punching or a cutting plotter, can be arbitrarily designed and be readily formed as designed.

In order to solve the above problem, a display device according to the present invention includes a lighting device described above, and a display panel for providing display by use of light from the lighting device.
In the present display device, the illumination brightness is gently distributed over the lighting device, and thereby display unevenness can be prevented or suppressed in the display device.

A liquid crystal panel can exemplify the above display panel. The display device as a liquid crystal display device has a variety of applications, such as a television display or a personal-computer display. Particularly, it is suitable for a large-screen display.

A television receiver according to the present invention includes a display device described above.
The present television receiver can provide TV pictures with improved visibility, in which display unevenness is prevented or suppressed.

### (Effect of the Invention)

The present invention can provide a lighting device having a simple construction capable of partially regulating the illumination brightness so as to provide a gentle distribution of illumination brightness. Further, a display device of the present invention can provide high-quality display in which display unevenness is prevented or suppressed. A television receiver of the present invention can provide high-quality TV pictures in which display unevenness is prevented or suppressed.

### BRIEF DESCRIPTION OF THE DRAWINGS

[FIG. 1] is an exploded perspective view showing the general construction of a television receiver according to an embodiment 1 of the present invention;
[FIG. 2] is an exploded perspective view showing the general construction of a liquid crystal display device included in the television receiver shown in FIG. 1;
[FIG. 3] is a sectional view of the liquid crystal display device of FIG. 2 along the line A-A;
[FIG. 4] is an explanatory diagram schematically showing the construction and operational effects of a characteristic part of a backlight device included in the liquid crystal display device shown in FIG. 2;
[FIG. 5] is a plan view schematically showing the construction of a light reflecting sheet included the backlight device shown in FIG. 4;
[FIG. 6] is a plan view schematically showing a light reflecting sheet as a modification included in a liquid crystal display device according to an embodiment 2 of the present invention;
[FIG. 7] is a plan view schematically showing a light reflecting sheet as a modification included in a liquid crystal display device according to an embodiment 3 of the present invention;
[FIG. 8] is a plan view schematically showing a light reflecting sheet as a modification included in a liquid crystal display device according to an embodiment 4 of the present invention;
[FIG. 9] is an explanatory diagram showing a modification of opening sections; [FIG. 10] is an explanatory diagram showing another modification of the opening sections;
[FIG. 11] is an explanatory diagram showing another modification of the opening sections;
[FIG. 12] is an explanatory diagram showing another modification of the opening sections;
[FIG. 13] is an explanatory diagram showing another modification of the opening sections;
[FIG. 14] is an explanatory diagram showing another modification of the opening sections;
[FIG. 15] is an explanatory diagram showing another modification of the opening sections;
[FIG. 16] is an explanatory diagram showing another modification of the opening sections; and
[FIG. 17] is an explanatory diagram showing another modification of the opening sections.

### Explanation of Symbols

10: Liquid crystal display device (Display device), 11: Liquid crystal panel (Display panel), 12: Backlight device (Lighting device), 14: Backlight chassis (Chassis), 17: Cold cathode tube (Linear light source), 17A: Narrow-interval area, 17B: Wide-interval area, 20: Lamp clip, 22, 23: Through hole, 30A: High voltage area, 30B: Low voltage area, 40: Light reflecting sheet (Light reflecting member), 50: Opening section, TV: Television receiver.

### BEST MODE FOR CARRYING OUT THE INVENTION

### <Embodiment 1>

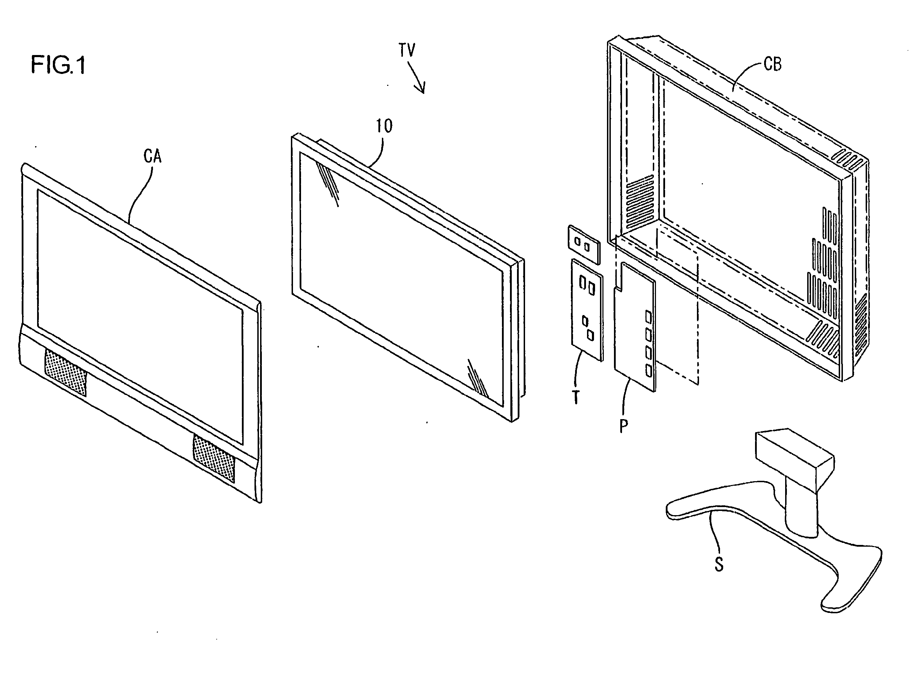

An embodiment 1 according to the present invention will be explained with reference to FIGS. 1 to 5.

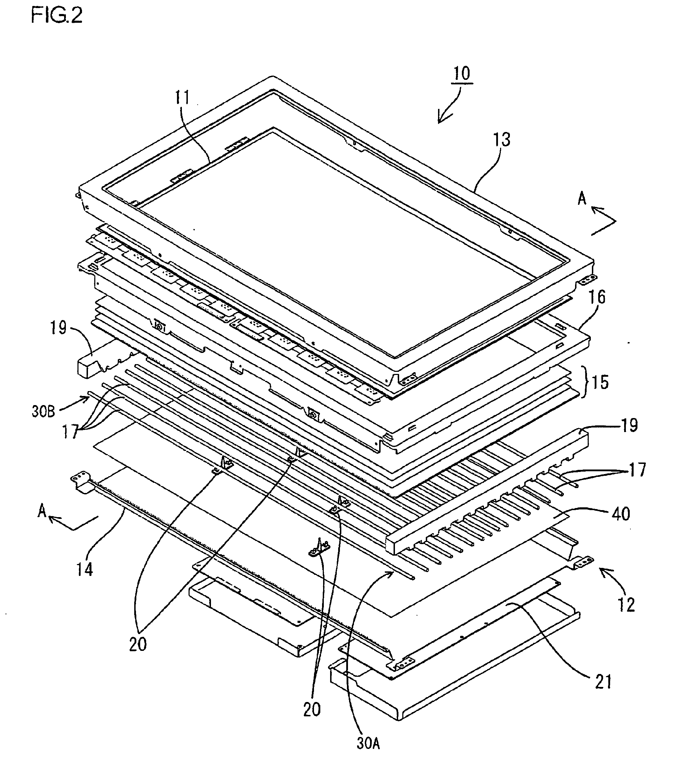

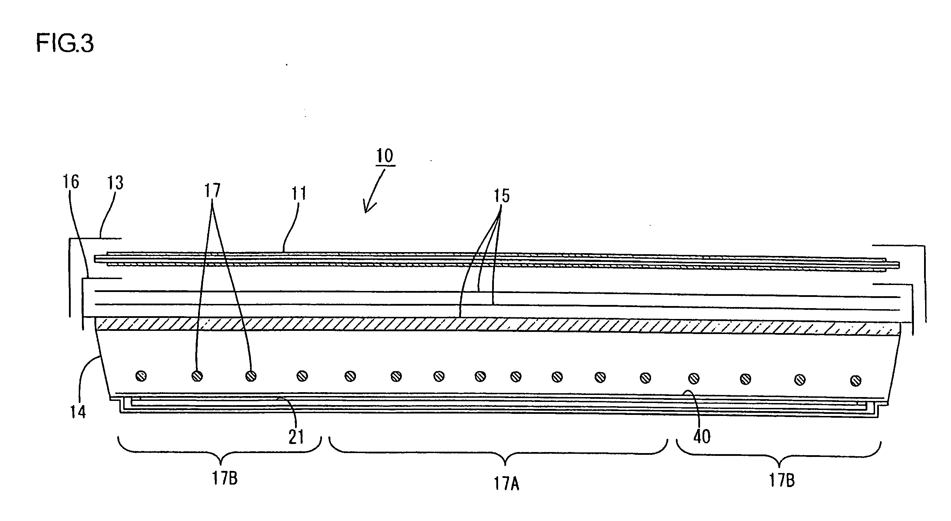

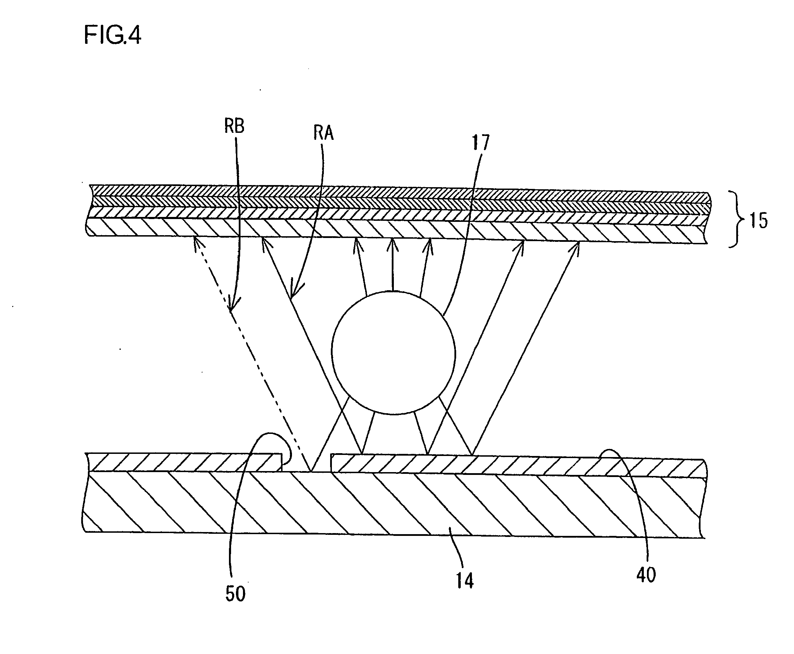

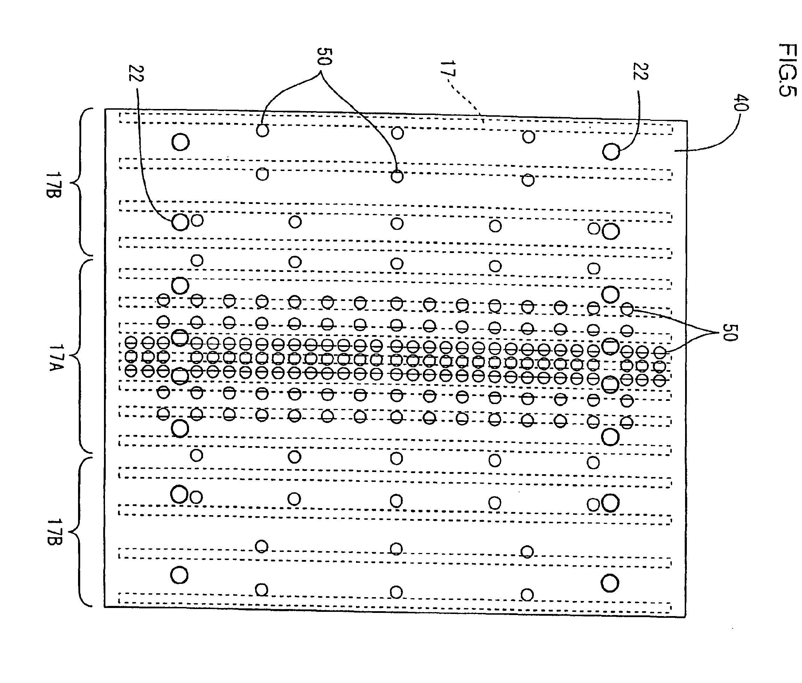

FIG. 1 is an exploded perspective view showing the general construction of a television receiver according to the present embodiment. FIG. 2 is an exploded perspective view showing the general construction of a liquid crystal display device. FIG. 3 is a sectional view showing the general construction of the liquid crystal display device along the line A-A. FIG. 4 is an explanatory diagram schematically showing the construction and operational effects of a characteristic part of a backlight device. FIG. 5 is a plan view schematically showing the construction of a light reflecting sheet.

Referring to FIG. 1, the television receiver TV according to the present embodiment includes a liquid crystal display device 10, and front and back cabinets CA and CB capable of holding the liquid crystal display device 10 therebetween. Further included are a power source P, a tuner T and a stand S. Referring to FIG. 2, the liquid crystal display device (display device) 10 forms a horizontally-elongated rectangular shape as a whole, and includes a liquid crystal panel 11 as a display panel and a backlight device (lighting device) 12 as an external light source, which are integrally held by a bezel 13 and the like.

Next, the liquid crystal panel 11 and the backlight device 12 of the liquid crystal display device 10 will be explained (See FIGS. 2 and 3).
The liquid crystal panel 11 includes a pair of glass substrates, which are attached to each other so as to face each other while a gap of a predetermined size is kept therebetween. Liquid crystal is sealed between the glass substrates. On one of the glass substrates, components such as switching elements (e.g., TFTs) connected to source wiring lines and gate wiring lines running at right angles to each other, and pixel electrodes connected to the switching elements are provided. On the other of the glass substrates, components such as a counter electrode and a color filter having R, G, and B color sections arranged in a predetermined pattern are provided.

The backlight device 12 is a so-called direct-light type backlight device that includes a plurality of linear light sources (e.g., cold cathode tubes (tubular light sources) 17 as high-pressure discharge tubes, in the present embodiment), which are positioned directly below the back surface of the liquid crystal panel 11 (i.e., the panel surface on the opposite side of the display side), and are arranged along the panel surface.

The backlight device.12 includes a backlight chassis (chassis) 14 having a substantially box-like shape with an opening on its upper side, and a plurality of optical members 15 (e.g., a diffuser plate, a diffusing sheet, a lens sheet and an optical sheet, in order from the lower side of the figure) which are arranged to cover in the opening of the backlight chassis 14. Further included is a frame 16 arranged to hold the optical members 15 on the backlight chassis 14. The backlight chassis 14 contains the cold cathode tubes 17, lamp holders 19 arranged to collectively cover the end portions of the cold cathode tubes 17, and lamp clips (or light source supporting members) 20 arranged to mount and hold the cold cathode tubes 17 on the backlight chassis 14. Note that the optical member 15 side of the cold cathode tubes 17 corresponds to the light emitting side of the backlight device 12.

An inverter board 21 for supplying drive voltage to the cold cathode tubes 17 is mounted to the backlight chassis 14, or specifically, mounted on the opposite side of the cold cathode tubes 17 (i.e., on the opposite side of the light emitting surface) . The inverter board 21 includes an inverter circuit that generates a high-frequency voltage for lighting the cold cathode tubes 17.

Each of the cold cathode tubes 17 forms an elongated tubular shape. A number (e.g., sixteen in FIG. 2) of cold cathode tubes 17 are contained in the backlight chassis 14 so that the longitudinal direction (or axial direction) thereof conforms with the long-side direction of the backlight chassis 14. Referring to FIG. 3, the cold cathode tubes 17 are arranged so that a narrow-interval area 17A where the intervals between the cold cathode tubes 17 are relatively narrow and wide-interval areas 17B where the intervals between the cold cathode tubes 17 are relatively wide are provided. Specifically, the narrow-interval area 17A is positioned in the array direction of the cold cathode tubes 17 so as to be on the center side, and therefore is positioned at the central area of the backlight device 12. The wide-interval areas 17B are positioned in the array direction of the cold cathode tubes 17 so as to be on the end sides, and therefore are positioned at the end areas of the backlight device 12.

The backlight chassis 14 is formed of a metallic plate, and the inner surface thereof is coated with black color. A light reflecting sheet (or a light reflecting member) 40 is provided to form a light reflecting surface, which is arranged on the side of the cold cathode tubes 17 that corresponds to the opposite side of the light emitting side. The backlight chassis 14 thus includes the light reflecting sheet 40, and thereby light from the cold cathode tubes 17 can be reflected to the optical members 15 such as the diffuser plate.

The light reflecting sheet 40 can be formed of a resin sheet having light reflectivity, for example. The light reflectivity thereof is set to be higher than that of the backlight chassis 14. The light reflecting sheet 40 is arranged parallel to the array direction of the cold cathode tubes 17. Referring to FIG. 5, the light reflecting sheet 40 is positioned with respect to the array of the cold cathode tubes 17, so that the area thereof corresponding to the center of the short side of the light reflecting sheet 40 faces the narrow-interval area 17A while the areas corresponding to the ends of the short side face the wide-interval areas 17B.

The light reflecting sheet 40 includes through holes 22 provided for insertion of the lamp clips 20, and opening sections 50 (not shown in FIG. 2) provided for regulating the light reflectivity of the light reflecting sheet 40. The through holes 22 and the opening sections 50 both have a circular shape, but differ in planar dimension from each other. According to the construction, as shown in FIG. 4, the lights from the cold cathode tubes 17 are partially reflected by the light reflecting sheet 40, while the rest may reach the metallic backlight chassis 14 through the opening sections 50 of the light reflecting sheet 40 and can be reflected by the backlight chassis 14.

The opening sections 50 can be formed in the light reflecting sheet 40 by punching. In the present embodiment, the opening sections 50 are the same in dimension. Referring to FIG. 5, the opening sections 50 are arranged in rows parallel to the long-side direction of the light reflecting sheet 40 (or to the axial direction of the cold cathode tubes 17). The plurality (e.g., fifteen in FIG. 5) of rows of opening sections 50 along the axial direction of the cold cathode tubes 17 are arranged in the short-side direction of the light reflecting sheet 40 (or in the array direction of the cold cathode tubes 17).

Within each of the rows, the intervals between opening sections 50 adjacently arranged on the same row along the axial direction of the cold cathode tube 17 are set to be constant.
However, the intervals between opening sections 50 adjacently arranged along the axial direction of the cold cathode tubes 17 vary among rows. On the rows located in the area of the light reflecting sheet 40 corresponding to the narrow-interval area 17A (i.e., the area of the light reflecting sheet 40 corresponding to the center of its short side), the opening sections 50 are arranged densely or at relatively small intervals. On the rows located in the areas of the light reflecting sheet 40 corresponding to the wide-interval areas 17B (i.e., the areas of the light reflecting sheet 40 corresponding to the ends of its short side), the opening sections 50 are arranged sparsely or at relatively large intervals. Specifically, the intervals are set to increase gradually from the rows facing the narrow-interval area 17A, toward the rows facing the wide-interval areas 17B. Thus, the opening ratio, i.e., the ratio of the areas of opening sections 50 in the entire light reflecting sheet 40, is set to be higher at the area corresponding to the narrow-interval area 17A, than at the areas corresponding to the wide-interval areas 17B.

The intervals between opening sections 50 adjacently arranged along the array direction of the cold cathode tubes 17 are set as follows. In the area of the light reflecting sheet 40 corresponding to the narrow-interval area 17A (i.e., the area of the light reflecting sheet 40 corresponding to the center of its short side), the opening sections 50 are arranged densely or at relatively small intervals. In the areas of the light reflecting sheet 40 corresponding to the wide-interval areas 17B (i.e., the areas of the light reflecting sheet 40 corresponding to the ends of its short side), the opening sections 50 are arranged sparsely or at relatively large intervals. Specifically, the intervals are set to increase gradually from the area facing the narrow-interval area 17A toward the areas facing the wide-interval areas 17B. Thus, the opening ratio, i.e., the ratio of the areas of opening sections 50 in the entire light reflecting sheet 40, is set to be higher at the area corresponding to the narrow-interval area 17A, than at the areas corresponding to the wide-interval areas 17B.

The television receiver TV thus constructed according to the present embodiment can provide the following operational effects.
In the liquid crystal display device 10 included in the television receiver TV of the present embodiment, the cold cathode tubes 17 are arranged so that the narrow-interval area 17A where the arrangement interval is relatively narrow and the wide-interval areas 17B where the arrangement interval is relatively wide are provided. Specifically, the narrow-interval area 17A is arranged on the center side of the backlight device 12, while the wide-interval areas 17B are arranged on the end sides of the backlight device 12. According to the construction, the illumination brightness can be higher at the narrow-interval area 17A than at the wide-interval areas 17B, and consequently the liquid crystal display device 10 can have improved visibility at the center of the screen. Further, the provision of the wide-interval areas 17B can lead to reduction in number of cold cathode tubes 17, resulting in cost reduction.

However, it is extremely difficult to arrange the narrow-interval area 17A capable of providing a relatively high illumination brightness and the wide-interval areas 17B capable of providing a relatively low illumination brightness, in a balanced manner. If the illumination brightness differs excessively between the narrow-interval area 17A and the wide-interval areas 17B, the entire distribution of illumination brightness may be provided as an uneven distribution, resulting in brightness unevenness in the liquid crystal display device 10.

In view of this, according to the present embodiment, the opening sections 50 of the light reflecting sheet 40 are additionally provided as regulating means for illumination brightness. Thereby, the opening ratio, i.e., the ratio of the areas of opening sections 50 in the entire light reflecting sheet 40, is set to be higher at the area corresponding to the narrow-interval area 17A, than at the areas corresponding to the wide-interval areas 17B.
The opening sections 50, thus provided on the light reflecting sheet 40, cannot reflect the light from the cold cathode tubes 17. Therefore, the amount of light to be reflected by the light reflecting sheet 40 can be reduced, and consequently the illumination brightness can be reduced. At the time, the reduction of illumination brightness can be set to be larger at the narrow-interval area 17A, as a result of setting the opening ratio, i.e., the ratio of the areas of opening sections 50 in the entire light reflecting sheet 40, to be higher at the area corresponding to the narrow-interval area 17A than at the areas corresponding to the wide-interval areas 17B. Thus, the difference in illumination brightness between the narrow-interval area 17A and the wide-interval areas 17B can be reduced. That is, the adjustment of illumination brightness between the narrow-interval area 17A and the wide-interval areas 17B can be achieved by partially regulating the opening ratio in the light reflecting sheet 40. Consequently, the illumination brightness can be gently distributed over the backlight device 12, and thereby display unevenness such as brightness unevenness in the liquid crystal display device 10 can be prevented or suppressed.

Further, in the present embodiment, the opening sections 50 are arranged so that the intervals between opening sections 50 adjacently arranged along the axial direction of the cold cathode tube 17 are set to be smaller at the area corresponding to the narrow-interval area 17A than at the areas corresponding to the wide-interval areas 17B.
Moreover, the opening sections 50 are arranged so that the intervals between opening sections 50 adjacently arranged along the array direction of cold cathode tubes 17 are set to be smaller at the area corresponding to the narrow-interval area 17A than at the areas corresponding to the wide-interval areas 17B.
According to the construction, a larger number of opening sections 50 can be provided in the area corresponding to the narrow-interval area 17A, compared to those in the areas corresponding to the wide-interval areas 17B. Thus, the opening ratio in the light reflecting sheet 40 is set to be relatively high at the area corresponding to the narrow-interval area 17A. Consequently, the amount of light to be reflected and therefore the illumination brightness can be reduced more greatly at the narrow-interval area 17A, and thereby the illumination brightness can be gently distributed between the narrow-interval area 17A and the wide-interval areas 17B.

The present embodiment includes the backlight chassis 14 formed of a metallic plate, and the light reflectivity of the light reflecting sheet 40 is set to be higher than that of the backlight chassis 14.
Referring to FIG. 4, the lights from the cold cathode tubes 17 are partially reflected by the light reflecting sheet 40, while the rest may reach the metallic backlight chassis 14 through the opening sections 50 of the light reflecting sheet 40 and can be reflected by the backlight chassis 14. When the lights from the cold cathode tubes 17 are thus reflected, the reflected light RA from the light reflecting sheet 40 can be provided at a higher rate than the rate for the light RB reflected by the backlight chassis 14 through the opening sections 50, because the light reflectivity of the light reflecting sheet 40 is set to be higher than that of the backlight chassis 14. Thus, reduction in amount of light to be reflected by the light reflecting sheet 40 can be achieved at the areas of the opening sections 50, and thereby adjustment of illumination brightness can be achieved.

In the present embodiment, the inner surface of the backlight chassis 14 is coated with black color.
In order to reliably provide the light reflectivity of the light reflecting sheet 40 higher than that of the backlight chassis 14, the backlight chassis 14 is thus coated with black color as regulating means for the light reflectivity of the backlight chassis 14. Consequently, the backlight chassis 14 can have a lower light reflectivity or more greatly differ in light reflectivity from the light reflecting sheet 40. Consequently, the opening sections 50 can function as regulators for illumination brightness, more effectively.

In the present embodiment, the light reflecting sheet 40 includes the through holes 22 provided for insertion of the lamp clips 20, and the opening sections 50 provided for regulating the light reflectivity. The through holes 22 and the opening sections 50 both have a circular shape, but differ in planar dimension from each other.
When the through holes 22 and the opening sections 50 are thus provided to differ in planar dimension (or in size) from each other, the through holes 22 and the opening sections 50 are distinguishable, and therefore confusion therebetween can be prevented at the time of assembly of the backlight device 12. Thereby, the manufacturing process may be simplified.

Further, in the present embodiment, the opening sections 50 are formed on the light reflecting sheet 40 by punching. The opening sections 50 can be thus formed by a simple method, as designed.

### <Embodiment 2>

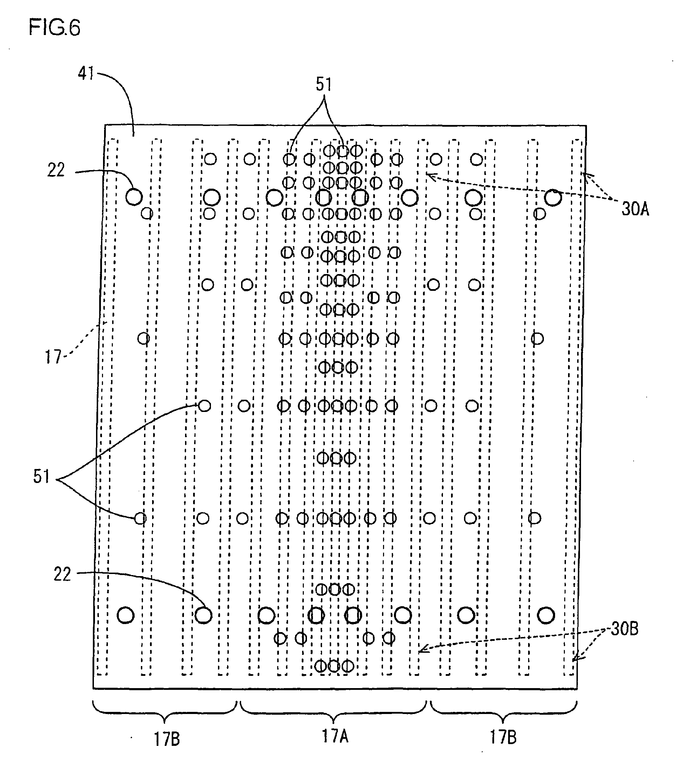

Next, an embodiment 2 of the present invention will be explained with reference to FIG. 6.
In the above embodiment 1, the arrangement of the opening sections 50 is determined based on the difference in illumination brightness between the narrow-interval area 17A and the wide-interval areas 17B. In the present embodiment, the arrangement of opening sections 51 is determined further based on the difference in illumination brightness due to voltage difference among areas of cold cathode tubes 17. The other constructions are similar to the above embodiment 1. Therefore, the same parts as the above embodiment are designated by the same symbols, and redundant explanations are omitted. FIG. 6 is a plan view schematically showing the construction of a light reflecting sheet according to the present embodiment.

An inverter board 21 for supplying drive voltage to the cold cathode tubes 17 is mounted on one side of the backlight chassis 14 corresponding to a long-side-directional end thereof, so that the drive voltage from the inverter board 21 is applied to one end portion of each cold cathode tube 17. Therefore, one end side of each cold cathode tube 17, to which the drive voltage is applied, is provided as an area subjected to high voltage (i.e., a high voltage area 30A), while the other end side is provided as an area subjected to low voltage (i.e., a low voltage area 30B).

Referring to FIG. 6, the light reflecting sheet 41 is arranged parallel to the array direction of the cold cathode tubes 17, so that one long-side-directional end portion (i.e., the upper end portion in FIG. 6) of the light reflecting sheet 41 faces the high voltage areas 30A of the cold cathode tubes 17 while the other long-side-directional end portion (i.e., the lower end portion in FIG. 6) of the light reflecting sheet 41 faces the low voltage areas 30B. A plurality of opening sections 51 having the same planar dimension are formed in the light reflecting sheet 41.

In each row, the intervals between opening sections 51 adjacently arranged on the same row along the axial direction of the cold cathode tube 17 are set to vary depending on the position. Specifically, the intervals between opening sections 51 located in areas corresponding to the high voltage areas 30A are relatively small, while the intervals between opening sections 51 located in areas corresponding to the low voltage areas 30B are relatively large.

The arrangement of the opening sections 51 along the array direction of the cold cathode tubes 17, that is, intervals between opening sections 51 in the area corresponding to the narrow-interval area 17A and in the areas corresponding to the wide-interval areas 17B, are set in a similar manner to that of the above embodiment 1.

As explained above, according to the present embodiment, the opening sections 51 are provided so that the opening ratio as the ratio of the areas of opening sections 51 in the entire light reflecting sheet 41 is higher at the areas corresponding to the high voltage areas 30A of the cold cathode tubes 17, than at the areas corresponding to the low voltage areas 30B.
The unevenness in illumination brightness of the backlight device 14 can be caused not only by the balanced arrangement of the narrow-interval area 17A and the wide-interval areas 17B, but also by voltage difference among areas of the cold cathode tubes 17. That is, the brightness of cold cathode tubes 17 as linear light sources may be higher at the high voltage areas 30A of the cold cathode tubes 17, than at the low voltage areas 30B.
In view of this, the opening ratio, i.e., the ratio of the areas of opening sections 51 in the entire light reflecting sheet 41, is set to be higher at the areas corresponding to the high voltage areas 30A of the cold cathode tubes 17, than at the areas corresponding to the low voltage areas 30B, as described above. Thereby, the amount of light to be reflected and therefore illumination brightness can be reduced more greatly at the high voltage areas 30A where the illumination brightness is relatively high in comparison with that at the low voltage areas 30B. Thus, the difference in illumination brightness between the high voltage areas 30A and the low voltage areas 30B can be reduced. Consequently, the illumination brightness can be provided to be gentle in the entire distribution.

Further, in the present embodiment, the opening sections 51 are arranged so that the intervals between opening sections 51 adjacently arranged along the axial direction of the cold cathode tube 17 are set to be smaller at the high voltage areas 30A than at the low voltage areas 30B.
According to the construction, a larger number of opening sections 51 can be provided in the areas corresponding to the high voltage areas 30A, compared to those in the areas corresponding to the low voltage areas 30B. Thus, the opening ratio in the light reflecting sheet 41 is set to be relatively high at the areas corresponding to the high voltage areas 30A. Consequently, the amount of light to be reflected and therefore the illumination brightness can be reduced more greatly at the high voltage areas 30A, and thereby the illumination brightness can be gently distributed between the high voltage areas 30A and the low voltage areas 30B.

Moreover, in the present embodiment, the opening sections 51 are arranged so that the intervals between opening sections 51 adjacently arranged along the array direction of cold cathode tubes 17 are set to be smaller at the narrow-interval area 17A than at the wide-interval areas 17B.
According to the construction, a larger number of opening sections 51 can be provided in the area corresponding to the narrow-interval area 17A, compared to those in the areas corresponding to the wide-interval areas 17B. Thus, the opening ratio in the light reflecting sheet 41 is set to be relatively high at the area corresponding to the narrow-interval area 17A. Consequently, the amount of light to be reflected and therefore the illumination brightness can be reduced more greatly at the narrow-interval area 17A, and thereby the illumination brightness can be gently distributed between the narrow-interval area 17A and the wide-interval areas 17B.

According to the present embodiment, the backlight device 12 includes a light reflecting sheet 41 having opening sections 51 as described above. Thereby, the illumination brightness can be gently distributed over the backlight device 12, and consequently display unevenness such as brightness unevenness in the liquid crystal display device 10 can be prevented or suppressed.

### <Embodiment 3>

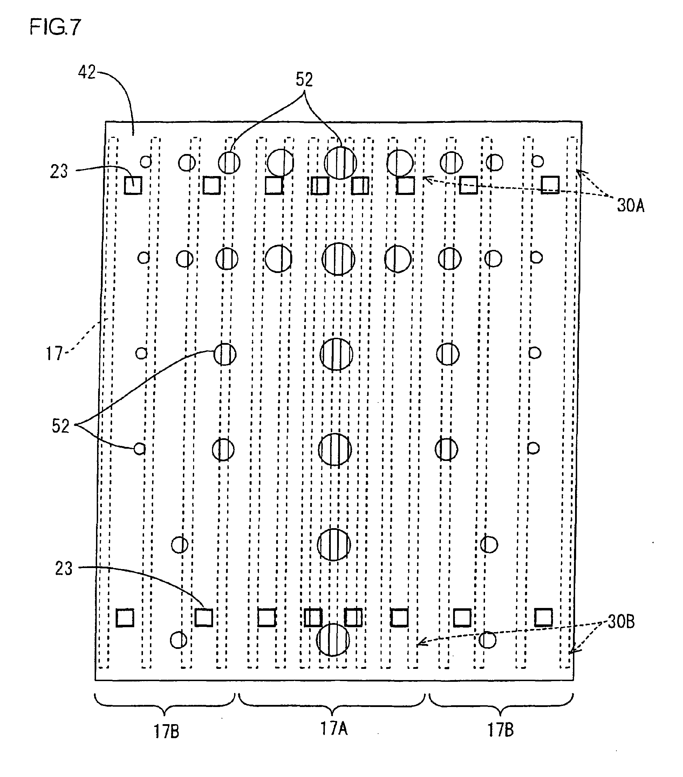

Next, an embodiment 3 of the present invention will be explained with reference to FIG. 7. The difference from the above embodiments 1 and 2 is in the arrangement of opening sections and the shapes of through holes. The other constructions are similar to the above embodiments. Therefore, the same parts as the above embodiments are designated by the same symbols, and redundant explanations are omitted. FIG. 7 is a plan view schematically showing the construction of a light reflecting sheet according to the present embodiment.

Referring to FIG. 7, through holes 23 and opening sections 52 are formed on the light reflecting sheet 42. Each through hole 23 has a square shape. On the other hand, the opening sections 52 have circular shapes, which are grouped into five types according to diameters.

The opening sections 52 having the same planar dimension are arranged in a row along the long-side direction of the light reflecting sheet 42 (or along the axial direction of the cold cathode tube 17).

A plurality (e.g., nine in FIG. 7) of rows of opening sections 52 along the axial direction of cold cathode tubes 17 are arranged in the short-side direction of the light reflecting sheet 42 (or in the array direction of the cold cathode tubes 17). On the rows located in the area of the light reflecting sheet 42 corresponding to the narrow-interval area 17A (i.e., the area of the light reflecting sheet 42 corresponding to the center of its short side), the opening sections 52 are set to be relatively large in planar dimension (or in size). On the rows located in the areas corresponding to the wide-interval areas 17B (i.e., the areas of the light reflecting sheet 42 corresponding to the ends of its short side), the opening sections 52 are set to be relatively small in planar dimension. Specifically, the planar dimensions are set to decrease gradually from the rows facing the narrow-interval area 17A, toward the rows facing the wide-interval areas 17B. Thus, the opening ratio, i.e., the ratio of the areas of opening sections 52 in the entire light reflecting sheet 42, is set to be higher at the area corresponding to the narrow-interval area 17A, than at the areas corresponding to the wide-interval areas 17B.

The intervals between opening sections 52 adjacently arranged along the array direction of the cold cathode tubes 17 are set as follows. In the areas of the light reflecting sheet 42 corresponding to the high voltage areas 30A (i.e., the upper area of the light reflecting sheet 42 in FIG. 7), the opening sections 52 are arranged densely or at relatively small intervals. In the areas of the light reflecting sheet 42 corresponding to the low voltage areas 30B (i.e., the lower area of the light reflecting sheet 42 in FIG. 7), the opening sections 52 are arranged sparsely or at relatively large intervals. Specifically, the intervals are set to increase gradually from the areas facing the high voltage areas 30A toward the areas facing the low voltage areas 30B. Thus, the opening ratio, i.e., the ratio of the areas of opening sections 52 in the entire light reflecting sheet 42, is set to be higher at the areas corresponding to the high voltage areas 30A, than at the areas corresponding to the low voltage areas 30B.

As explained above, according to the present embodiment, the opening sections 52 are provided so that those located in the area corresponding to the narrow-interval area 17A of the cold cathode tubes 17 are larger in planar dimension, than those located in the areas corresponding to wide-interval areas 17B.
When the opening sections 52 located in the area corresponding to the narrow-interval area 17A are thus provided to be larger in planar dimension (or in size) than those located in the areas corresponding to the wide-interval areas 17B, the opening ratio in the light reflecting sheet 42 can be relatively high at the area corresponding to the narrow-interval area 17A. Consequently, the amount of light to be reflected and therefore the illumination brightness can be reduced more greatly at the narrow-interval area 17A, and thereby the illumination brightness can be gently distributed between the narrow-interval area 17A and the wide-interval areas 17B.

Further, in the present embodiment, the opening sections 52 are arranged so that the intervals between opening sections 52 adjacently arranged along the array direction of cold cathode tubes 17 are set to be smaller at the high voltage areas 30A of the cold cathode tubes 17 than at the low voltage areas 30B.
According to the construction, a larger number of opening sections 52 can be provided in the areas corresponding to the high voltage areas 30A, compared to those in the areas corresponding to the low voltage areas 30B. Thus, the opening ratio in the light reflecting member is set to be relatively high at the areas corresponding to the high voltage areas 30A. Consequently, the amount of light to be reflected and therefore the illumination brightness can be reduced more greatly at the high voltage areas 30A, and thereby the illumination brightness can be gently distributed between the high voltage areas 30A and the low voltage areas 30B.

In the present embodiment, the light reflecting sheet 42 includes the through holes 23 provided for insertion of the lamp clips 20, and the opening sections 52 provided for regulating the light reflectivity. Each through hole 23 has a square shape, while each opening section 52 has a circular shape.
When the through holes 23 and the opening sections 52 are thus provided to differ in shape from each other, the through holes 23 and the opening sections 52 are readily distinguishable, and therefore confusion therebetween can be prevented at the time of assembly of the backlight device 12. Thereby, the manufacturing process may be simplified.

According to the present embodiment, the backlight device 12 includes a light reflecting sheet 42 having opening sections 52 as described above. Thereby, the illumination brightness can be gently distributed over the backlight device 12, and consequently display unevenness such as brightness unevenness in the liquid crystal display device 10 can be prevented or suppressed.

### <Embodiment 4>

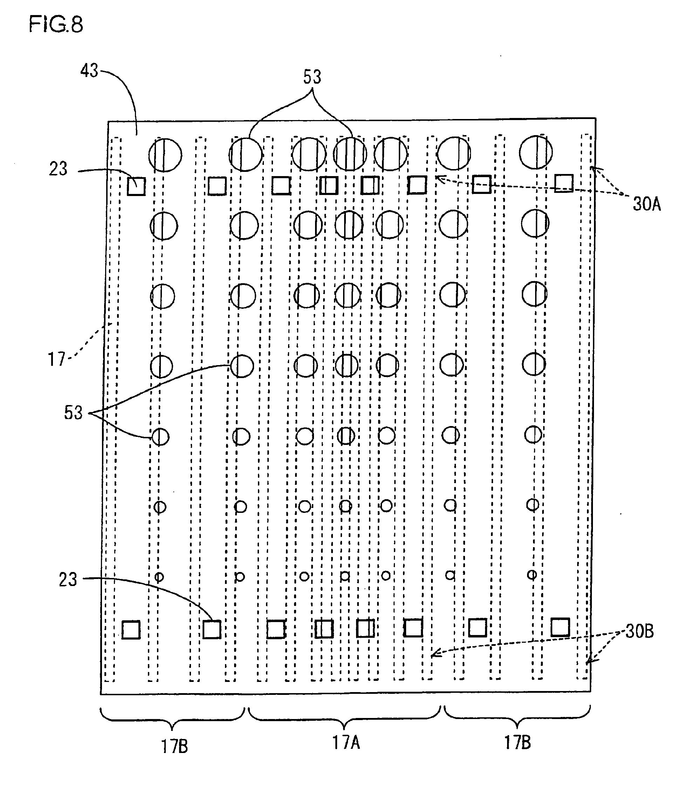

Next, an embodiment 4 of the present invention will be explained with reference to FIG. 8. The difference from the above embodiments 1, 2 and 3 is in the arrangement of opening sections. The other constructions are similar to the above embodiments. Therefore, the same parts as the above embodiments are designated by the same symbols, and redundant explanations are omitted. FIG. 8 is a plan view schematically showing the construction of a light reflecting sheet according to the present embodiment.

Referring to FIG. 8, through holes 23 and opening sections 53 are formed on the light reflecting sheet 43. Each through hole 23 has a square shape. On the other hand, the opening sections 53 have circular shapes, which are grouped into seven types according to diameters.

The opening sections 53 are arranged in a row along the long-side direction of the light reflecting sheet 43 (or along the axial direction of the cold cathode tube 17). In the areas of the light reflecting sheet 43 corresponding to the high voltage areas 30A (i.e., the upper area of the light reflecting sheet 43 in FIG. 8), the opening sections 53 are set to be relatively large in planar dimension (or in size). In the areas corresponding to the low voltage areas 30B (i.e., the lower area of the light reflecting sheet 43 in FIG. 8), the opening sections 53 are set to be relatively small in planar dimension. Specifically, the planar dimensions are set to decrease gradually from the areas facing the high voltage areas 30A toward the areas facing the low voltage areas 30B. Thus, the opening ratio, i.e., the ratio of the areas of opening sections 53 in the entire light reflecting sheet 43, is set to be higher at the areas corresponding to the high voltage areas 30A, than at the areas corresponding to the low voltage areas 30B.

A plurality (e.g., seven in FIG. 8) of rows of opening sections 53 along the axial direction of cold cathode tubes 17 are arranged in the short-side direction of the light reflecting sheet 43 (or in the array direction of the cold cathode tubes 17). The opening sections 53 are also arranged in columns along the short-side direction of the light reflecting sheet 43. Thus, the opening sections 53 are arranged in parallel lines.
The intervals between opening sections 53 adjacently arranged along the array direction of the cold cathode tubes 17 are set as follows. In the area of the light reflecting sheet 43 corresponding to the narrow-interval area 17A (i.e., the area of the light reflecting sheet 43 corresponding to the center of its short side), the opening sections 53 are arranged densely or at relatively small intervals. In the areas of the light reflecting sheet 43 corresponding to the wide-interval areas 17B (i.e., the areas of the light reflecting sheet 43 corresponding to the ends of its short side), the opening sections 53 are arranged sparsely or at relatively large intervals. Specifically, the intervals are set to increase gradually from the area corresponding to the narrow-interval area 17A, toward the areas corresponding to the wide-interval areas 17B. Thus, the opening ratio, i.e., the ratio of the areas of opening sections 53 in the entire light reflecting sheet 43, is set to be higher at the area corresponding to the narrow-interval area 17A, than at the areas corresponding to the wide-interval areas 17B.

As explained above, according to the present embodiment, the opening sections 53 are provided so that those located in the areas corresponding to the high voltage areas 30A of the cold cathode tubes 17 are larger in planar dimension (or in size), than those located in the areas corresponding to low voltage areas 30B. Thereby, the opening ratio in the light reflecting sheet 43 can be relatively high at the areas corresponding to the high voltage areas 30A. Consequently, the amount of light to be reflected and therefore the illumination brightness can be reduced more greatly at the high voltage areas 30A, and thereby the illumination brightness can be gently distributed between the high voltage areas 30A and the low voltage areas 30B.

Further, in the present embodiment, the opening sections 53 are arranged so that the intervals between opening sections 53 adjacently arranged along the array direction of cold cathode tubes 17 are set to be smaller at the area corresponding to the narrow-interval area 17A than at the areas corresponding to the wide-interval areas 17B.
According to the construction, a larger number of opening sections 53 can be provided in the area corresponding to the narrow-interval area 17A, compared to those in the areas corresponding to the wide-interval areas 17B. Thus, the opening ratio in the light reflecting sheet 43 is set to be relatively high at the area corresponding to the narrow-interval area 17A. Consequently, the amount of light to be reflected and therefore the illumination brightness can be reduced more greatly at the narrow-interval area 17A, and thereby the illumination brightness can be gently distributed between the narrow-interval area 17A and the wide-interval areas 17B.

Moreover, in the present embodiment, the opening sections 53 are arranged in parallel lines, so as to form a regular arrangement. Thereby, the illumination brightness can be regulated with improved accuracy.

According to the present embodiment, the backlight device 12 includes a light reflecting sheet 43 having opening sections 53 as described above. Thereby, the illumination brightness can be gently distributed over the backlight device 12, and consequently display unevenness such as brightness unevenness in the liquid crystal display device 10 can be prevented or suppressed.

### <Other Embodiments>

Shown above are embodiments of the present invention. However, the present invention is not limited to the embodiments explained in the above description made with reference to the drawings. The following embodiments may be included in the technical scope of the present invention, for example.

(1) In the above embodiments, the narrow-interval area is positioned in the array direction of the cold cathode tubes so as to be on the center side, while the wide-interval areas are positioned in the array direction of the cold cathode tubes so as to be on the end sides. However, a narrow-interval area and a wide interval area may be located at any position.
Particularly in the case that a lighting device of the present invention is used for a display device, it is preferable that a narrow-interval area is positioned in the array direction of cold cathode tubes so as to be on the inner side of a wide-interval area, because the display device is required to have relatively high brightness at the center of the screen.

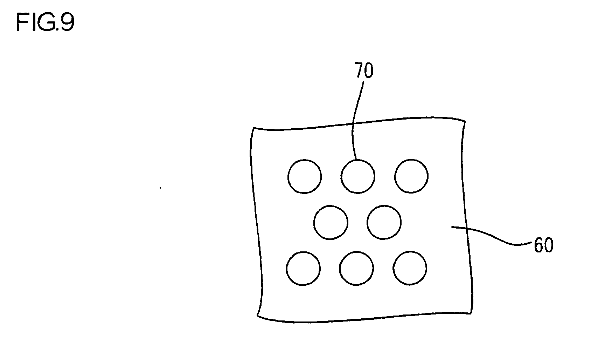

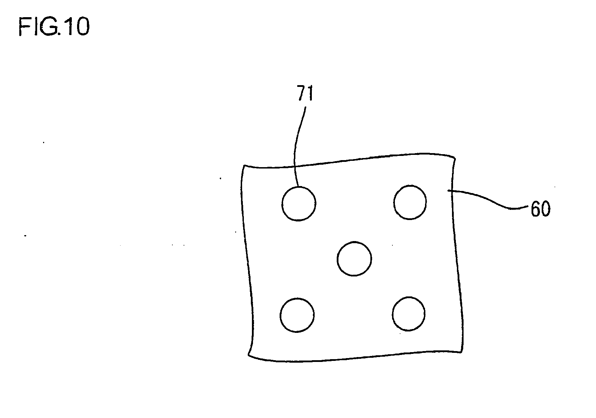

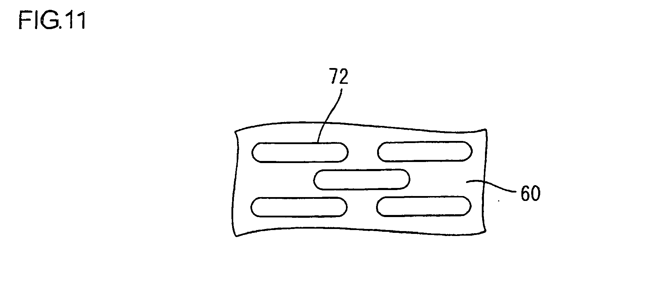

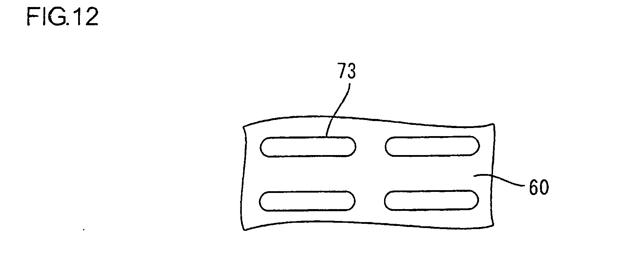

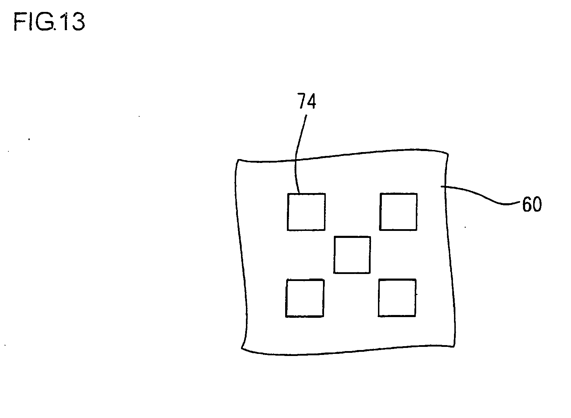

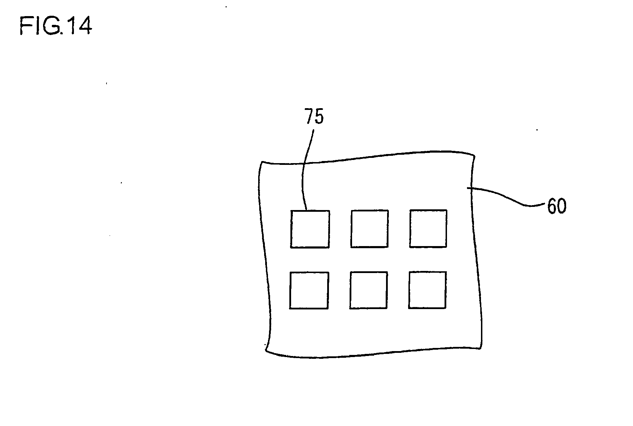

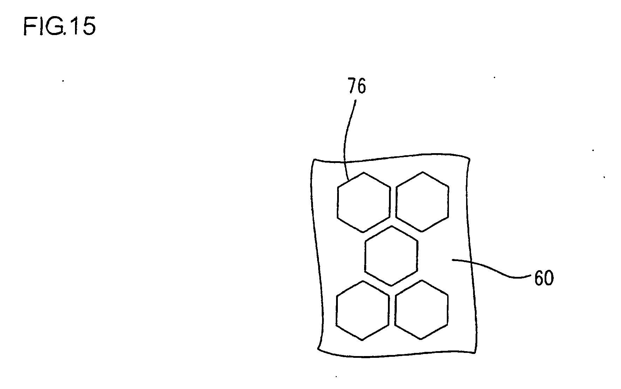

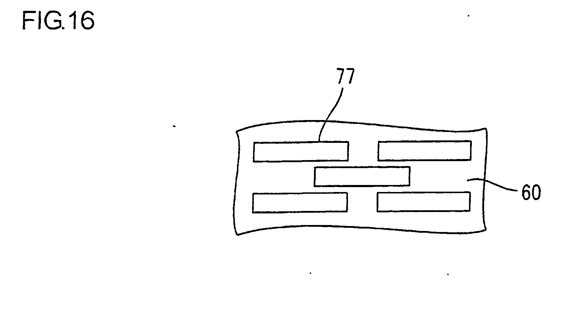

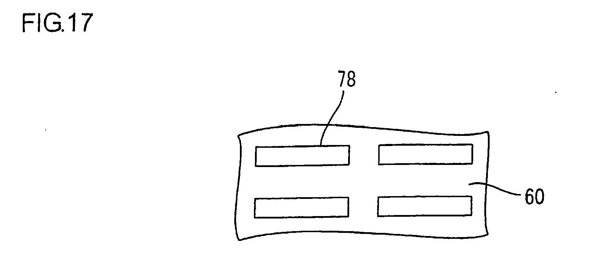

(2) In the above embodiments, the opening sections having circular shapes are arranged in parallel lines (to form an in-line arrangement of circular holes). However, the shapes and arrangement of opening sections are not limited to this configuration. For example, on a light reflecting sheet 60, referring to FIG. 9, opening sections 70 having a circular shape may be arranged in a zigzag pattern with 60-degree angles to form a 60-degree zigzag arrangement of circular holes. Alternatively, referring to FIG. 10, opening sections 71 having a circular shape may be arranged in a zigzag pattern with 90-degree angles to form a right-angled zigzag arrangement of circular holes. As shown in FIG. 11, opening sections 72 having an oval shape may be arranged in a zigzag pattern to form a zigzag arrangement of oval holes. As shown in FIG. 12, opening sections 73 having an oval shape may be arranged in parallel lines to form an in-line arrangement of oval holes. As shown in FIG. 13, opening sections 74 having a square shape may be arranged in a zigzag pattern to form a zigzag arrangement of square holes. As shown in FIG. 14, opening sections 75 having a square shape may be arranged in parallel lines to form an in-line arrangement of square holes. As shown in FIG. 15, opening sections 76 having a hexagonal shape may be arranged in a zigzag pattern with 60-degree angles to form a 60-degree zigzag arrangement of hexagonal holes. As shown in FIG. 16, opening sections 77 having a rectangular shape may be arranged in a zigzag pattern to form a zigzag arrangement of rectangular holes. As shown in FIG. 17, opening sections 78 having a rectangular shape may be arranged in parallel lines to form an in-line arrangement of rectangular holes.

(3) In the above embodiments, the opening sections on a light reflecting sheet have the same shape. However, opening sections having different shapes may be provided on a light reflecting sheet.

(4) In the above embodiments, the opening sections are formed by punching. However, the opening sections may be formed by any forming means, as long as they can be formed as designed. For example, a cutting plotter can be used as forming means.

(5) In the above embodiments, the opening sections are arranged in rows along the axial direction of cold cathode tubes. However, opening sections may be irregularly arranged. The irregular arrangement is particularly suitable as means for achieving a small interval between adjacent opening sections in the area corresponding to the narrow-interval area.

(6) In the above embodiments, the backlight chassis is coated with black color. However, any color such as gray or a similar color can be used as a coating color, as long as it is unlikely to reflect light. Alternatively, a member with black, gray or a similar color may be arranged between the backlight chassis and the light reflecting sheet.

(7) In the above embodiments, the backlight chassis is coated with black color. However, this construction may lead to an excessively large difference in brightness between the opening sections and the ordinary portions surrounding the opening sections (or areas not including opening sections). In this case, the opening sections may be visible when the lighting device of the present invention is used for a display device. In view of this, the backlight chassis can be coated with white or a similar color, as long as the light reflectivity thereof does not exceed that of the light reflecting sheet. Alternatively, a transparent member or a member with white or a similar color may be arranged between the backlight chassis and the light reflecting sheet.

(8) In the above embodiments, the backlight chassis is formed of a metallic plate. However, it may be formed by resin molding.

(9) In the above embodiments, cold cathode tubes are used as light sources. However, the present invention can include a construction in which another type of light sources such as hot cathode tubes is used, for example.

(10) In the above embodiments, TFTs are used as switching elements of the liquid crystal display device. However, the present invention can be applied to a liquid crystal display device that uses another type of switching elements than TFTs (e.g., thin-film diodes (TFDs)). Further, the present invention can be applied to a liquid crystal display device for monochrome display, as well as a liquid crystal display device capable of color display.

(11) In the above embodiments, a backlight device of a liquid crystal display device is shown as a lighting device. However, the present invention can be applied to other kinds of lighting devices such as a lighting device for interior lighting or a backlight device for illuminating a still image including an advertising image.
Moreover, although a liquid crystal display device is shown as a display device in the above embodiments, the present invention can be applied to other types of display devices than a liquid crystal type, which use a backlight device.

(12) A television receiver having a liquid crystal panel is shown in the above embodiments. However, the present invention can be applied to a television receiver that uses another type of display panel than the liquid crystal panel.

## Claims

1. A lighting device (12) comprising:
a plurality of linear light sources (17) arranged parallel to one another in a plane to form an array; and
a light reflecting member (40, 41, 42, 43) arranged on one side of said linear light sources (17) opposite to the light emitting side of the lighting device, wherein:
said linear light sources (17) are arranged in a narrow-interval area (17A) and a wide-interval area (17B), wherein the interval between adjacent light sources (17) in the wide-interval area (17B) is wider than in the narrow-interval area (17A); **characterized in that**
said light reflecting member (40, 41, 42, 43) has openings (50, 51, 52, 53) in a first area thereof corresponding to said narrow-interval area (17A) and in a second area thereof corresponding to said wide-interval area (17B), respectively; and
said openings (50, 51, 52, 53) are provided such that the ratio between the area of said openings (50, 51, 52, 53) in said first area and a total area of said first area is higher than the ratio between the area of said openings (50, 51, 52, 53) in said second area and a total area of said second area.

2. A lighting device (12) as in claim 1, wherein said openings (50, 51, 52, 53) are arranged more sparsely in said second area than in said first area.

3. A lighting device (12) as in claim 1 or 2, wherein said narrow-interval area (17A) is positioned in the array direction of said linear light sources (17) at the center of said array, and said wide-interval area (17B) is positioned in the array direction of said linear light sources (17) at an end side of said array.

4. A lighting device (12) as in any one of claims 1 to 3, wherein said openings (50, 51, 52. 53) have a planar dimension that is larger in the first area than in the second area.

5. A lighting device (12) as in any one of claims 1 to 4, wherein:
said array of linear light sources (17) includes high voltage area (30A) to be subjected to a relatively high voltage and a low voltage area (30B) to be subjected to a relatively low voltage; and
said openings (50, 51, 52. 53) are provided so that the ratio of the area of said openings in a region of said light reflecting member and the area of said region is higher in an area facing said high voltage area (30A) of said linear light sources (17), than in an area facing said low voltage area (30B) of said linear light sources (17).

6. A lighting device (12) as in any one of claims 1 to 5, wherein:
said openings (50, 51, 52, 53) include a plurality of openings (50, 51, 52, 53) being arranged along the axial direction of said linear light sources (17) and/or along the array direction of said linear light sources (17).

7. A lighting device (12) as in claim 6, wherein:
the interval between openings (50, 51, 52. 53) of said plurality of openings (50, 51, 52, 53) which are adjacently arranged along the axial direction and in the first area is smaller than the interval between openings (50, 51, 52, 53) of said plurality of openings (50, 51, 52, 53) adjacently arranged along the axial direction and in the second area; and/or
the interval between openings (50, 51, 52, 53) of said plurality of openings (50, 51, 52. 53) which are adjacently arranged along the array direction and in the first area is smaller than the interval between openings (50, 51, 52, 53) of said plurality of openings (50, 51, 52, 53) adjacently arranged along the array direction and in the second area.

8. A lighting device (12) as in claim 5, wherein:
the interval between openings (50, 51, 52, 53) of said plurality of openings (50, 51. 52, 53) adjacently arranged along the axial direction and in the area facing said high voltage area (30A) is smaller than the interval between openings (50, 51, 52, 53) of said plurality of openings (50, 51, 52, 53) adjacently arranged along the axial direction and in the area facing said low voltage area (30B).

9. A lighting device (12) as in any one of claims 5 or 8, wherein:
the interval between openings (50, 51, 52, 53) of said plurality of openings (50. 51, 52, 53) adjacently arranged along the array direction and in the area facing said high voltage area (30A) is smaller than the interval between openings (50. 51, 52. 53) of said plurality of openings (50, 51, 52, 53) adjacently arranged along the array direction and in the area facing said low voltage area (30B).

10. A lighting device (12) as in any one of claims 5, 8 or 9, wherein said openings (50, 51, 52. 53) each have a planar dimension that is larger in the area facing said high voltage area (30A) than in the area facing said low voltage area (30B).

11. A lighting device (12) as in any one of claims 1 to 10, further comprising:
a chassis (14) arranged to contain said linear light sources (17) and said light reflecting member (40, 41, 42, 43), wherein:
said chassis (14) is formed of a metallic plate; and wherein
said light reflecting member (40, 41, 42, 43) has a light reflectivity higher than the light reflectivity of said chassis (14).

12. A lighting device (12) as in claim 11, further comprising:
a light source supporting member (20) arranged to support said linear light sources (17) on said chassis (14), wherein:
said light reflecting member (40, 41, 42, 43) has a through hole (22, 23) for insertion of said light source supporting member (20); and wherein
said openings (50, 51, 52, 53) and said through hole (22, 23) differ in planar dimension from each other.

13. A lighting device (12) as in claim 11, further comprising:
a light source supporting member (20) arranged to support said linear light sources (17) on said chassis (14), wherein:
said light reflecting member (40, 41, 42, 43) has a through hole (22, 23) for insertion of said light source supporting member (40, 41, 42, 43); and wherein
said openings (50, 51, 52, 53) and said through hole (22, 23) differ in shape from each other.

14. A display device (10) comprising:
a lighting device (12) as in any one of claims 1 to 13; and
a display panel (11) arranged on the illumination light emitting side of said lighting device (12).

15. A television receiver comprising a display device (10) as in claim 14.

## Patentansprüche

1. Beleuchtungsvorrichtung (12), mit:
mehreren geradlinigen Lichtquellen (17), die in einer Ebene parallel zueinander angeordnet sind, um eine Anordnung zu bilden; und
einem lichtreflektierenden Element (40, 41, 42, 43), das auf einer Seite der geradlinigen Lichtquellen (17) gegenüber der lichtemittierenden Seite der Beleuchtungsvorrichtung angeordnet ist, wobei:
die geradlinigen Lichtquellen (17) in einer Fläche (17A) mit engem Intervall und in einer Fläche (17B) mit weitem Intervall angeordnet sind, wobei das Intervall zwischen benachbarten Lichtquellen (17) in der Fläche (17B) mit weitem Intervall weiter ist als in der Fläche (17A) mit engem Intervall;
**dadurch gekennzeichnet, dass**
das lichtreflektierende Element (40, 41, 42, 43) Öffnungen (50, 51, 52, 53) in einer ersten Fläche hiervon besitzt, die der Fläche (17A) mit engem Intervall entspricht, bzw. in einer zweiten Fläche hiervon, die der Fläche (17B) mit weitem Intervall entspricht, besitzt; und
die Öffnungen (50, 51, 52, 53) so vorgesehen sind, dass das Verhältnis zwischen der Fläche der Öffnungen (50, 51, 52, 53) in der ersten Fläche und einer Gesamtfläche der ersten Fläche höher ist als das Verhältnis zwischen der Fläche der Öffnungen (50, 51, 52, 53) in der zweiten Fläche und einer Gesamtfläche der zweiten Fläche.

2. Beleuchtungsvorrichtung (12) nach Anspruch 1, wobei die Öffnungen (50, 51, 52, 53) in der zweiten Fläche spärlicher als in der ersten Fläche angeordnet sind.

3. Beleuchtungsvorrichtung (12) nach Anspruch 1 oder 2, wobei die Fläche (17A) mit engem Intervall in der Anordnungsrichtung der geradlinigen Lichtquellen (17) im Zentrum der Anordnung angeordnet ist und die Fläche (17B) mit weitem Intervall in der Anordnungsrichtung der geradlinigen Lichtquellen (17) an einer Stirnseite der Anordnung angeordnet ist.

4. Beleuchtungsvorrichtung (12) nach einem der Ansprüche 1 bis 3, wobei die Öffnungen (50, 51, 52, 53) eine ebene Abmessung besitzen, die in der ersten Fläche größer ist als in der zweiten Fläche.

5. Beleuchtungsvorrichtung (12) nach einem der Ansprüche 1 bis 4, wobei:
die Anordnung geradliniger Lichtquellen (17) eine Hochspannungsfläche (30A), die einer verhältnismäßig hohen Spannung unterworfen wird, und eine Niederspannungsfläche (30B), die einer verhältnismäßig niedrigen Spannung unterworfen wird, enthält; und
die Öffnungen (50, 51, 52, 53) so vorgesehen sind, dass das Verhältnis der Fläche der Öffnungen in einem Bereich des lichtreflektierenden Elements und der Fläche dieses Bereichs in einer Fläche, die der Hochspannungsfläche (30A) der geradlinigen Lichtquellen (17) zugewandt ist, höher ist als in einer Fläche, die der Niederspannungsfläche (30B) der geradlinigen Lichtquellen (17) zugewandt ist.

6. Beleuchtungsvorrichtung (12) nach einem der Ansprüche 1 bis 5, wobei:
die Öffnungen (50, 51, 52, 53) mehrere Öffnungen (50, 51, 52, 53) enthalten, die in der axialen Richtung der geradlinigen Lichtquellen (17) und/oder in der Anordnungsrichtung der geradlinigen Lichtquellen (17) angeordnet sind.

7. Beleuchtungsvorrichtung (12) nach Anspruch 6, wobei:
das Intervall zwischen Öffnungen (50, 51, 52, 53) der mehreren Öffnungen (50, 51, 52, 53), die in der axialen Richtung und in der ersten Fläche benachbart angeordnet sind, kleiner ist als das Intervall zwischen Öffnungen (50, 51, 52, 53) der mehreren Öffnungen (50, 51, 52, 53), die in der axialen Richtung und in der zweiten Fläche benachbart angeordnet sind; und/oder das Intervall zwischen Öffnungen (50, 51, 52, 53) der mehreren Öffnungen (50, 51, 52, 53), die in der Anordnungsrichtung und in der ersten Fläche benachbart angeordnet sind, kleiner ist als das Intervall zwischen Öffnungen (50, 51, 52, 53) der mehreren Öffnungen (50, 51, 52, 53), die in der Anordnungsrichtung und in der zweiten Fläche benachbart angeordnet sind.

8. Beleuchtungsvorrichtung (12) nach Anspruch 5, wobei:
das Intervall zwischen Öffnungen (50, 51, 52, 53) der mehreren Öffnungen (50, 51, 52, 53), die in der axialen Richtung und in der der Hochspannungsfläche (30A) zugewandten Fläche benachbart angeordnet sind, kleiner ist als das Intervall zwischen Öffnungen (50, 51, 52, 53) der mehreren Öffnungen (50, 51, 52, 53), die in der axialen Richtung und in der der Niederspannungsfläche (30B) zugewandten Fläche benachbart angeordnet sind.

9. Beleuchtungsvorrichtung (12) nach einem der Ansprüche 5 oder 8, wobei:
das Intervall zwischen Öffnungen (50, 51, 52, 53) der mehreren Öffnungen (50, 51, 52, 53), die in der Anordnungsrichtung und in der der Hochspannungsfläche (30A) zugewandten Fläche benachbart angeordnet sind, kleiner ist als das Intervall zwischen Öffnungen (50, 51, 52, 53) der mehreren Öffnungen (50, 51, 52, 53), die in der Anordnungsrichtung und in der der Niederspannungsfläche (30B) zugewandten Fläche benachbart angeordnet sind.

10. Beleuchtungsvorrichtung (12) nach einem der Ansprüche 5, 8 oder 9, wobei die Öffnungen (50, 51, 52, 53) jeweils eine ebene Abmessung besitzen, die in der der Hochspannungsfläche (30A) zugewandten Fläche größer ist als in der der Niederspannungsfläche (30B) zugewandten Fläche.

11. Beleuchtungsvorrichtung (12) nach einem der Ansprüche 1 bis 10, ferner mit:
einem Rahmen (14), der dazu ausgelegt ist, die geradlinigen Lichtquellen (17) und das lichtreflektierende Element (40, 41, 42, 43) zu enthalten, wobei der Rahmen (14) aus einer Metallplatte gebildet ist; und wobei
das lichtreflektierende Element (40, 41, 42, 43) ein Lichtreflexionsvermögen besitzt, das höher ist als das Lichtreflexionsvermögen des Rahmens (14).

12. Beleuchtungsvorrichtung (12) nach Anspruch 11, ferner mit:
einem Lichtquellen-Tragelement (20), das dazu ausgelegt ist, die geradlinigen Lichtquellen (17) auf dem Rahmen (14) zu tragen, wobei:
das lichtreflektierende Element (40, 41, 42, 43) ein Durchgangsloch (22, 23) besitzt, um das Lichtquellen-Tragelement (20) einzusetzen; und wobei
die Öffnungen (50, 51, 52, 53) und das Durchgangsloch (22, 23) sich in der ebenen Abmessung voneinander unterscheiden.

13. Beleuchtungsvorrichtung (12) nach Anspruch 11, ferner mit:
einem Lichtquellen-Tragelement (20), das dazu ausgelegt ist, die geradlinigen Lichtquellen (17) auf dem Rahmen (14) zu tragen, wobei
das lichtreflektierende Element (40, 41, 42, 43) ein Durchgangsloch (22, 23) besitzt, um das Lichtquellen-Tragelement (40, 41, 42, 43) einzusetzen; und wobei
die Öffnungen (50, 51, 52, 53) und das Durchgangsloch (22, 23) sich hinsichtlich ihrer Form unterscheiden.

14. Anzeigevorrichtung (10), mit:
einer Beleuchtungsvorrichtung (12) nach einem der Ansprüche 1 bis 13; und
einer Anzeigetafel (11), die auf der Beleuchtungslicht-Emissionsseite der Beleuchtungsvorrichtung (12) angeordnet ist.

15. Fernsehempfänger, der eine Anzeigevorrichtung (10) nach Anspruch 14 enthält.

## Revendications

1. Dispositif d'éclairage (12) comprenant :
une pluralité de sources de lumière linéaires (17) disposées parallèlement les unes aux autres dans un plan afin de former un réseau ; et
un élément de réflexion de lumière (40, 41, 42, 43) disposé sur un côté desdites sources de lumière linéaires (17) en regard du côté d'émission de lumière du dispositif d'éclairage, dans lequel :
lesdites sources de lumière linéaires (17) sont disposées dans une zone à intervalle étroit (17A) et une zone à intervalle large (17B), l'intervalle compris entre des sources de lumière adjacentes (17) dans la zone à intervalle large (17B) étant plus grand que celui dans la zone à intervalle étroit (17A) ; **caractérisé en ce que**
ledit élément de réflexion de lumière (40, 41, 42, 43) comprend des ouvertures (50, 51, 52, 53) dans une première zone de celui-ci correspondant à ladite zone à intervalle étroit (17A) et dans une seconde zone de celui-ci correspondant à ladite zone à intervalle large (17B), respectivement ; et
lesdites ouvertures (50, 51, 52, 53) sont prévues de manière à ce que le rapport entre la superficie desdites ouvertures (50, 51, 52, 53) dans ladite première zone et une superficie totale de ladite première zone est supérieur au rapport entre la superficie desdites ouvertures (50, 51, 52, 53) dans ladite seconde zone et une superficie totale de ladite seconde zone.

2. Dispositif d'éclairage (12) conformément à la revendication 1, dans lequel lesdites ouvertures (50, 51, 52, 53) sont disposées de manière plus espacée dans ladite seconde zone que dans ladite première zone.

3. Dispositif d'éclairage (12) conformément à la revendication 1 ou 2, dans lequel ladite zone à intervalle étroit (17A) est positionnée dans la direction de réseau desdites sources de lumière linéaires (17) au centre dudit réseau et ladite zone à intervalle large (17B) est positionnée dans la direction de réseau desdites sources de lumière linéaires (17) au niveau d'un côté d'extrémité dudit réseau.

4. Dispositif d'éclairage (12) conformément à l'une quelconque des revendications 1 à 3, dans lequel lesdites ouvertures (50, 51, 52, 53) présentent une dimension plane qui est plus grande dans la première zone que dans la seconde zone.

5. Dispositif d'éclairage (12) conformément à l'une quelconque des revendications 1 à 4, dans lequel :
lesdites sources de lumière linéaires (17) comprennent une zone à tension élevée devant être soumise à une tension relativement élevée et une zone à tension faible (30B) devant être soumise à une tension relativement faible ; et
lesdites ouvertures (50, 51, 52, 53) sont prévues de manière à ce que le rapport de la superficie desdites ouvertures dans une région dudit élément de réflexion de lumière et de la superficie de ladite région est plus élevé dans une zone en regard de ladite zone à tension élevée (30A) desdites sources de lumière linéaires (17) que dans une zone en regard de ladite zone à tension faible (30B) desdites sources de lumière linéaires (17).

6. Dispositif d'éclairage (12) conformément à l'une quelconque des revendications 1 à 5, dans lequel :
lesdites ouvertures (50, 51, 52, 53) comprennent une pluralité d'ouvertures (50, 51, 52, 53) disposées suivant la direction axiale desdites sources de lumière linéaires (17) et/ou suivant la direction de réseau desdites sources de lumière linéaires (17).

7. Dispositif d'éclairage (12) conformément à la revendication 6, dans lequel :
l'intervalle compris entre des ouvertures (50, 51, 52, 53) de ladite pluralité d'ouvertures (50, 51, 52, 53) qui sont disposées de manière adjacente suivant la direction axiale et dans la première zone est plus petit que l'intervalle compris des ouvertures (50, 51, 52, 53) de ladite pluralité d'ouvertures (50, 51, 52, 53) disposées de manière adjacente suivant la direction axiale et dans la seconde zone ; et/ou
l'intervalle compris entre des ouvertures (50, 51, 52, 53) de ladite pluralité d'ouvertures (50, 51, 52, 53) qui sont disposées de manière adjacente suivant la direction de réseau et dans la première zone est plus petit que l'intervalle compris entre les ouvertures (50, 51, 52, 53) de ladite pluralité d'ouvertures (50, 51, 52, 53) disposées de manière adjacente suivant la direction de réseau et dans la seconde zone.

8. Dispositif d'éclairage (12) conformément à la revendication 5, dans lequel :
l'intervalle compris entre des ouvertures (50, 51, 52, 53) de ladite pluralité d'ouvertures (50, 51, 52, 53) disposées de manière adjacente suivant la direction axiale et dans la zone en regard de ladite zone à tension élevée (30A) est plus petit que l'intervalle compris entre des ouvertures (50, 51, 52, 53) de ladite pluralité d'ouvertures (50, 51, 52, 53) disposées de manière adjacente suivant la direction axiale et dans la zone en regard de ladite zone à tension faible (30B).

9. Dispositif d'éclairage (12) conformément à l'une quelconque des revendications 5 ou 8, dans lequel :
l'intervalle compris entre des ouvertures (50, 51, 52, 53) de ladite pluralité d'ouvertures (50, 51, 52, 53) disposées de manière adjacente suivant la direction de réseau et dans la zone en regard de ladite zone à tension élevée (30A) est plus petit que l'intervalle compris entre des ouvertures (50, 51, 52, 53) de ladite pluralité d'ouvertures (50, 51, 52, 53) disposées de manière adjacente suivant la direction d réseau dans la zone en regard de ladite zone à tension faible (30B).

10. Dispositif d'éclairage (12) conformément à l'une quelconque des revendication 5, 8 ou 9, dans lequel lesdites ouvertures (50, 51, 52, 53) présentent chacune une dimension plane qui est plus grande dans la zone en regard de ladite zone de tension élevée (30A) que dans la zone en regard de ladite zone à tension faible (30B).

11. Dispositif d'éclairage (12) conformément à l'une quelconque des revendications 1 à 10 comprenant en outre :
un châssis (14) conçu pour contenir lesdites sources de lumière linéaires (17) et ledit élément de réflexion de lumière (40, 41, 42, 43), dans lequel :
ledit châssis (14) est constitué d'une plaque métallique; et dans lequel
ledit élément de réflexion de lumière (40, 41, 42, 43) comprend une réflectivité de lumière supérieure à la réflectivité de lumière dudit châssis (14).

12. Dispositif d'éclairage (12) conformément à la revendication 11 comprenant en outre :
un élément de support de source de lumière (20) conçu de manière à supporter lesdites sources de lumière linéaires (17) sur ledit châssis (14), dans lequel :
ledit élément de réflexion de lumière (40, 41, 42, 43) comprend un trou traversant (22, 23) pour l'introduction dudit élément de support de source de lumière (20) ; et dans lequel
lesdites ouvertures (50, 51, 52, 53) et ledit trou traversant (22, 23) présentent une dimension plane différente les uns par rapport aux autres.

13. Dispositif d'éclairage (12) conformément à la revendication 11 comprenant en outre :
un élément de support de source de lumière (20) conçu pour supporter lesdites sources de lumière linéaires (17) sur ledit châssis (14), dans lequel :
ledit élément de réflexion de lumière (40, 41, 42, 43) comprend un trou traversant (22, 23) pour l'introduction dudit élément de support de source de lumière (40, 41, 42, 43) ; et dans lequel
lesdites ouvertures (50, 51, 52, 53) et ledit trou traversant (22, 23) présentent une forme différente les uns par rapport aux autres.

14. Dispositif d'affichage (10) comprenant :
un dispositif d'éclairage (12) conformément à l'une quelconque des revendications 1 à 13 ; et
un panneau d'affichage (11) disposé sur le côté d'émission de lumière d'éclairage dudit dispositif d'éclairage (12).

15. Récepteur de télévision comprenant un dispositif d'affichage (10) conformément à la revendication 14.
